# EUROPEAN PATENT APPLICATION

(11) **EP 4 503 358 A1**
(43) Date of publication of application: **05.02.2025**
(21) Application number: 23189510.3
(22) Date of filing: 03.08.2023
(51) Int. Cl.: H02G 15/16, H01R 4/2433, H01R 11/09, H01R 43/01, H02G 15/117, H01R 43/02

(54) **CABLE HOUSING**

(71) Applicant: Aptiv Technologies AG, 8200 Schaffhausen (CH)
(72) Inventor: GÄRTNER, Markus, 42117 Wuppertal (DE); SRINIVASAN, Manoharan, 600057 Chennai (IN)
(74) Representative: Bardehle Pagenberg Partnerschaft mbB Patentanwälte Rechtsanwälte

(57) **Abstract**

The present invention relates to a cable housing 1, in particular a splice saver, for accommodating at least two cables 20, 21. The cable housing 1 comprises at least one cable mounting slot 2, 3, 4 in at least one wall 5 of the cable housing 1. Said at least one slot 2, 3, 4 comprises a cable-insertion portion 10 adapted to receive at least one cable 20. Said cable-insertion portion 10 comprises a first width 6. Said at least one slot 2, 3, 4 further comprises a cable-retention portion 15 adapted to retain the at least one cable 20 by force fit and/or form fit. Moreover, the cable-retention portion 15 comprises a second width *7* which is smaller than the first width 6.

## Description

### 1. Technical field

The present invention relates to a cable housing, a cable housing system, and a method for assembling a cable housing system.

### 2. Prior art

In modern vehicles, the transmission of electric power and signals is becoming increasingly important. This particularly applies to hybrid and electric vehicles, whose functionality is highly based on a stable supply of electric energy.

To transmit electric power and/or signals to different parts of a vehicle a splicing of cables is regularly required. Exemplarily, a cable may need to be spliced to provide electricity to an electric engine attached to a left wheel of a vehicle and to an electric engine attached to a right wheel of the vehicle.

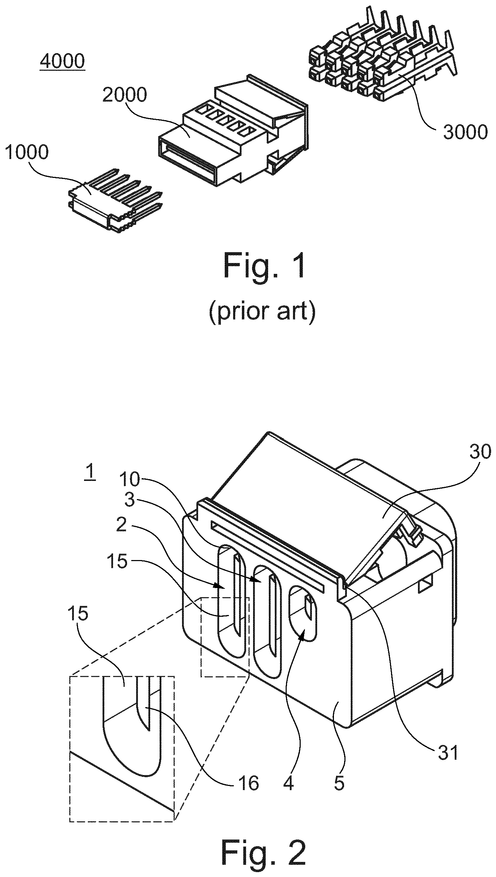

To provide one or more splices within a single assembly, splice savers which may be also referred to as splice saver connectors and/or splice saver housings are used. Thereby, an example of a splice saver as presently used in the art is illustrated in Fig. 1**.** The splice saver 4000 is configured to receive a metal busbar 1000 which is configured to connect all the cables 3000 to be mounted. Furthermore, all terminals 3000 that belong to the splice saver 4000 are supposed to be mounted to one housing 2000 to which also the metal busbar 1000 is connected.

First, the aspect that all terminals 3000 that belong to the splice saver 4000 are supposed to be mounted to one terminal 2000 regularly results in production difficulties, is complicated to automize, and/or bears the risk of poor connections which may not withstand the requirements in the automotive sector.

Second, the aspect that for establishing an electric connection between the terminals 3000 an intermediate element, i.e. a metal busbar 1000, is required often leads to poor connections and/or increased resistances.

Third, the provision of the busbar 1000 requires additional manufacturing and processing steps as well as additional material.

Thus, it is an object of the present disclosure to provide a cable housing, a cable housing system, and a method for assembling a cable housing system that overcome the aforementioned drawbacks at least partially.

### 3. Summary of the invention

The object of the present invention is at least partially achieved by a cable housing, in particular a splice saver, for accommodating at least two cables in accordance with claim 1**.**

The cable housing comprises at least one cable mounting slot in at least one wall of the housing. Thereby it will be understood that the at least on cable mounting slot may be an elongated and narrow opening. Further, the at least on cable mounting slot may extend through the cable housing wall, preferably in a substantially straight manner.

Thereby said at least one slot comprises a cable-insertion portion adapted to receive at least one cable, wherein the cable-insertion portion comprises a first width.

Further, said at least one slot comprises a cable-retention portion adapted to retain the at least one cable by force fit and/or form fit, wherein the cable-retention portion comprises a second width which is smaller than the first width.

It is understood that the at least one cable may be easily inserted into the cable-insertion portion, when the diameter of the at least one cable is smaller than the first width. Further it is understood that the at least one cable may be easily retained within the cable-retention portion by force fit and/or form fit, when the diameter of the at least one cable is larger than the second width.

By means of the cable-insertion portion and the cable-retention portion an easy insertion and subsequent retention of the at least on cable may be achieved in the cable housing without the necessity to conduct extensive fixation operations and/or providing additional fixation elements.

The at least two cables which the cable housing is supposed to accommodate, i.e. also the at least one cable mentioned above, may comprise a conductor material. The conductor material may include at least one of the following: copper, aluminum, a copper-based alloy and/or an aluminum-based alloy. Further, the conductor material may include brass. The at least two cables may be rigid and/or flexible. Moreover, the at least two cables may be at least partially surrounded by an isolation. Thereby, the isolation is preferably removed or removable from a portion of each of the at least two cables. Particularly, said portions may be prepared such that an ultra-sonic welding to connect the at least two cables is possible.

Further, said splice saver which may be also referred to as splice saver connector and/or splice saver housing may be adapted for providing one or more splices within a single assembly.

The cable housing may comprise a fixation means which can be switched between an open state and a closed state. The open state may be referred to as a state where the at least one cable may be inserted and/or removed from the cable housing. The closed state may be referred to as a state where the at least one cable may not be inserted and/or not be removed from the cable housing. Thereby the fixation means may be adapted to close the cable-insertion portion at least partially when being in the closed state. Moreover, the fixation means is preferably adapted to extend into the cable-retention portion when being in the closed state. By extending into the cable-retention portion when being in the closed state, the fixation means may exert a pressure onto a cable being arranged inside the cable-retention portion. Thereby the fixation of said cable inside the cable housing may be improved.

Even further preferably the fixation means comprises a living hinge. The living hinge may be also referred to as film hinge. A living hinge is defined as a thin flexible hinge made from the same material as the two rigid pieces it connects. Living hinges allow for minimal friction and/or very little wear. Further, they are of low cost and/or ease of manufacturing. The living hinge may be integrally formed with the cable housing and a fixation element which is movable relative to the cable housing. Exemplarily, the living hinge may be integrally formed with the cable housing and the fixation element by means of injection molding. Particularly injection molding allows for a very fast and/or accurate manufacturing. It is understood that the fixation element may be adapted to close the cable-insertion portion at least partially when being in the closed state. Moreover, it is understood that the fixation element is preferably adapted to extend into the cable-retention portion when being in the closed state.

The fixation means may be adapted to press the at least one cable against one end of the at least one slot. Thereby said end is preferably on the opposite end of the slot than the cable-insertion portion. By pressing the at least one cable against one end of the at least one slot, the at least one cable may be safely retained within the cable housing. Moreover, a movement of the at least one cable within the at least one slot may be avoided. Thereby wear at the at least one cable and/or the cable housing may be avoided.

The cable-retention portion may comprise at least one knife edge adapted to retain the at least one cable by means of force fit and/or form fit, wherein preferably the at least one knife edge is adapted for pressing in and/or cutting in the at least one cable. The at least one knife edge may comprise a polymer and/or a metallic material. Thereby polymers may be preferred due to their outstanding insulative properties and/or easy manufacturing. Particularly, the at least one knife edge may be adapted for pressing in and/or cutting in an isolation of the at least one cable. Thereby the at least one knife edge may not contact a conductor within the at least on cable. Thereby conductive properties may be maintained on a high level. Preferably, the knife edge(s) is(are) integrally formed with the connector housing.

The cable-retention portion may comprise at least two knife edges adapted to retain the at least one cable by means of force fit and/or form fit, wherein preferably the at least two knife edges are substantially parallel and/or define the second width, wherein further preferably the at least two knife edges are adapted for pressing in and/or cutting in the at least one cable. The at least two knife edges may comprise a polymer and/or a metallic material. Thereby polymers may be preferred due to their outstanding insulative properties and/or easy manufacturing, e.g. by means of injection molding. Particularly, the at least two knife edges may be adapted for pressing in and/or cutting in an isolation of the at least one cable. Thereby the at least one knife edge may not contact a conductor within the at least on cable. Thereby conductive properties may be maintained on a high level.

Preferably, the knife edge(s) is(are) integrally formed with the connector housing.

The fixation means may be adapted to press the at least one cable towards the at least one knife edge or to press the at least one cable between the at least two knife edges. Thereby it may be achieved that a force fit and/or a form fit between the at least one cable and the at least one knife edge or the at least two knife edges is obtained. Hence, fixation of the at least one cable within the cable housing may be further improved and/or movements of the at least one cable may be avoided or at least reduced.

The at least one knife edge or the at least two knife edges may extend along the at least one slot. Hence, the at least one cable which is inserted into the cable-insertion portion and pressed into the cable-retention portion, e.g. by means of the fixation means, may slide along the at least one knife edge or the at least two knife edges. Thereby the at least one cable is fixed in the cable housing when entering the cable-retention portion without the need for further means. Moreover, in the above configuration, wherein the at least one knife edge or the at least two knife edges extend along the at least one slot it is particularly preferred when at least two cables are supposed to be inserted into the at least on slot. This is as the cables may then be held back in a row and supported against each other by means of an uncomplicated configuration.

The cable housing may comprise at least two slots, preferably at least three slots. Thus, the cable housing may allow for sufficient space for a number of cables which are required in automotive projects. Further, the above-mentioned fixation means may fixate at least one cable within each of the slots. Thereby two slots and three slots have proven to be particularly preferred regarding an interaction with the fixation means.

Further, at least one of the at least one slots is configured to receive at least two cables, preferably at least three cables. Slots being configured to receive at least two cables provide the advantage that the inserted cables may be supported against each other.

The object according to the present invention is further at least partially achieved by a cable housing system which comprises the cable housing as described above, and at least two cables accommodated in the housing. Since the cable housing system comprises the cable housing as described above it is understood that the advantages described above also apply for the cable housing system. Further, aspects which are mentioned above with regards to cables for the cable housing also apply for the cable housing system.

The object according to the present invention is further at least partially achieved by a method in accordance with claim 11. In particular, by a method for assembling a cable housing system comprising the following steps:
a) providing a cable housing according to the above description;
b) providing at least two cables;
c) inserting a cable through a cable-insertion portion of one slot;
d) transferring said cable into a cable-retention portion of said slot, and
e) repeating steps c) and d) with another cable.

Step c) may be conducted in that a gripper of an automatic wire harness assembly machine inserts the cable, which preferably has been cut and stripped in a pre-process, through a cable-insertion portion of one slot.

Step d) may be conducted in that after the gripper has inserted the cable, the gripper mounts the cable in the slot by moving it into the cable-retention portion. The cable may thereby be connected to the cable housing and optionally slightly clamped by the above-described at least one knife edge or the at least two knife edges. Then the gripper may open its jaws and release the cable. The cable is fixed and cannot fall out.

Thereby the method may further comprise the following step after step b), preferably after step e): ultra-sonic welding together portions of the at least two cables, wherein preferably the portions of the at least two cables which are welded together were each inserted through the cable housing. Thereby the at least two cables may be welded into a splice and connected together electrically and mechanically.

Moreover, the method may further comprise the following step: closing the cable housing by switching the fixation means from the open state to the closed state. Thereby the fixation means may close the cable-insertion portion at least partially. Thus, no cable may fall out of the cable housing. Moreover, the fixation means may then extend into the cable-retention portion. By extending into the cable-retention portion when being in the closed state, the fixation means may exert a pressure onto a cable being arranged inside the cable-retention portion. Thereby the fixation of said cable inside the cable housing may be improved.

Preferably, in all the embodiments disclosed herein, the housing or housing system does not comprise a metal bus bar.

### 4. Brief description of the accompanying figures

In the following, the accompanying figures are briefly described:
Fig. 1 shows a cable housing known from prior art;
Fig. 2 shows a perspective front view of an exemplary cable housing according to the present invention;
Fig. 3 shows a perspective rear view of the exemplary cable housing according to the present invention;
Fig. 4 shows a front view of the exemplary cable housing according to the present invention;
Fig. 5 illustrates inserting a first cable through a cable-insertion portion of one slot of the cable housing according to the present invention;
Fig. 6 illustrates transferring the first cable into a cable-retention portion of said slot;
Fig. 7 illustrates an interference between the first cable being inserted into the slot and two knife edges within the slot;
Fig. 8 illustrates closing the cable housing by switching the fixation means from the open state to the closed state;
Fig. 9 illustrates ultra-sonic welding together portions of cables which are arranged in the cable housing, and
Fig. 10 shows an exemplary method according to the present invention.

### 5. Detailed description of the figures

Fig. 1 shows a cable housing 4000, i.e. splice saver, known from prior art, wherein a metal busbar 1000 is configured to connect to terminals 3000 to be mounted.

The exemplary inventive cable housing depicted in Figs. 2 to 9 is a splice saver, for accommodating seven cables. The cable housing 1 comprises three cable mounting slots 2, 3, 4 in a wall 5 of the cable housing 1**.**

Thereby each of the slots 2, 3, 4 comprises a cable-insertion portion adapted to receive at least one cable and a cable-retention portion adapted to retain the at least one cable by force fit and/or form fit.

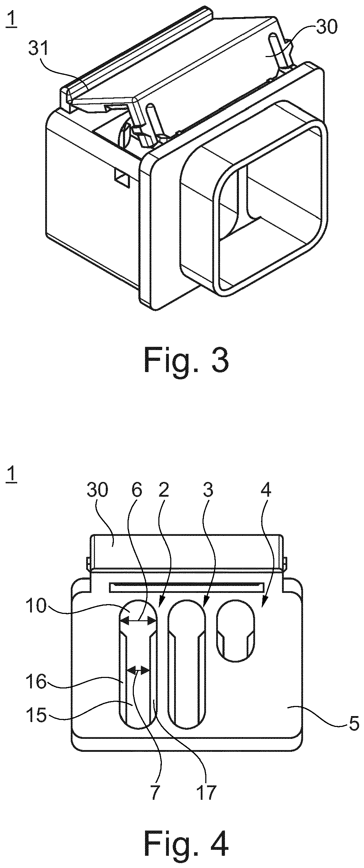

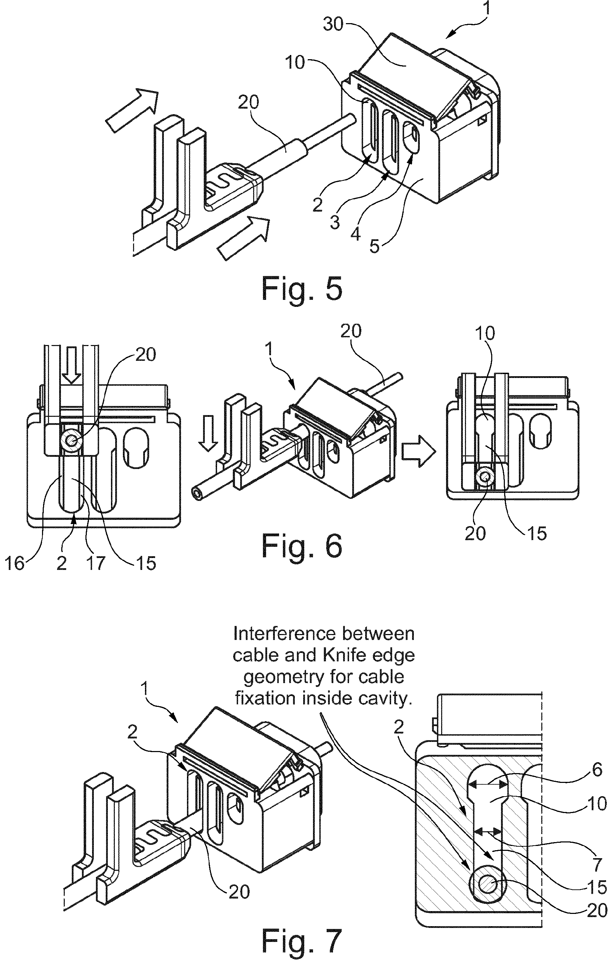

In Fig. 2 to Fig. 9 particularly the slot 2 is provided with reference signs to describe the specific configuration. Nevertheless, from the Figures it is understood that the further slots 3, 4 comprise the same configuration, except that slot 4 is configured to receive only one cable. The slot 2 comprises a cable-insertion portion 10 adapted to receive at least one cable 20, wherein the cable-insertion portion 10 comprises a first width 6 (cf. to Fig. 4). The slot 2 further comprises a cable-retention portion 15 adapted to retain the at least one cable 20 by force fit and/or form fit, wherein the cable-retention portion 15 comprises a second width 7 which is smaller than the first width 6. The first width 6 and the second width 7 are illustrated in Fig. 4 and Fig. 7.

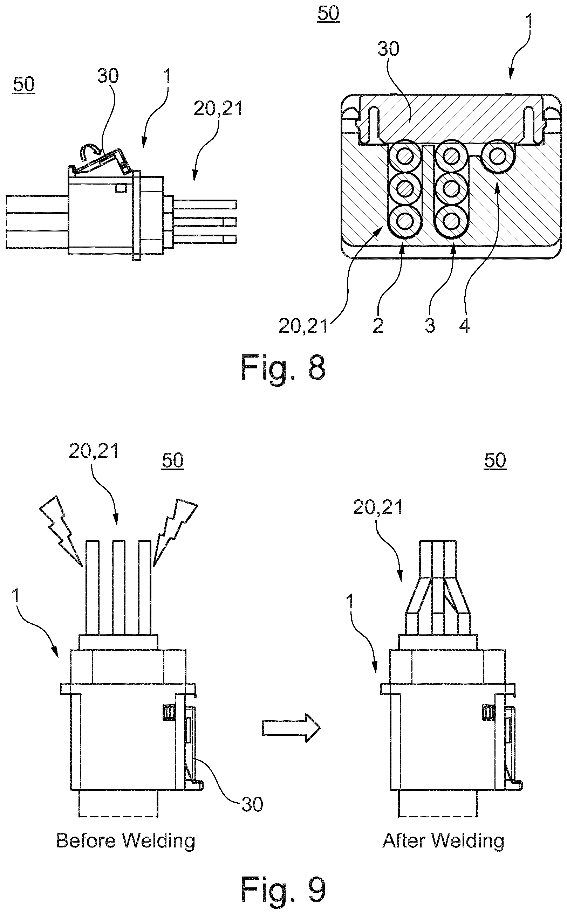

As depicted in Fig. 2 and Fig. 3, the cable housing 1 comprises a fixation means 30 which can be switched between an open state and a closed state. Switching the fixation means 30 from the open state and the closed state is depicted in Fig. 8. As can be further seen in Fig. 8, the fixation means 30 is adapted to close the cable-insertion portion 10 at least partially when being in the closed state. The fixation means 30 of the exemplary cable housing 1 comprises a living hinge 31. Said living hinge 31 is integrally formed with the cable housing 1 and a fixation element which is movable relative to the cable housing 1**.** As can be particularly seen in Fig. 3, the fixation means 30, i.e. the fixation element being integrally formed with the living hinge 31, comprises means which allow for a form fit between the fixation means 30 and an aperture provided in the cable housing.

As shown in Fig. 4, the cable-retention portion 15 of the cable housing 1 comprises two knife edges 16, 17 being adapted to retain cables 20, 21 by means of force fit and/or form fit. Thereby the two knife edges 16, 17 are parallel and define the second width 7. Moreover, as shown in the detail of Fig. 7, the two knife edges 16, 17 are adapted for pressing in and/or cutting in cables 20, 21. As can be further seen in Fig. 4, the two knife edges 16, 17 extend along the slot 2**.** Thereby it is apparent that also in the other slots 3, 4 knife edges as in slot 2 are arranged.

Fig. 5 to Fig. 9 illustrate the automated assembly process of a cable housing system 50 which comprises the cable housing 1 and seven cables accommodated in the final cable housing 1. For the sake of clarity, only two cables 20, 21 are provided with reference signs.

Fig. 5 illustrates providing a cable 20 by means of a gripper and a cable housing 1**.** The cable 20 comprises an isolation which is however removed (stripped) at an end of the cable which is to be inserted into the cable housing 1. Said gripper preferably is an automated gripper. Further, in Fig. 5 by means of the two bold arrows, inserting 130 the cable 20 through the cable-insertion portion 10 of the slot 2 is illustrated.

Fig. 6 illustrates transferring said cable 20 into a cable-retention portion 15 of said slot 2. Thereby it is understood that in the two left pictures the cable 20 is still in the cable-insertion portion 10. Whereas in the right picture the cable 20 has already been pressed between the at least two knife edges 16, 17 of the cable-retention portion 15 of the slot 2 by means of the gripper.

In Fig. 7 the state is illustrated, when the cable 20 has been moved to an end of the slot 2, wherein this end is opposite to the cable-insertion portion 10. Hence, a final state of the transfer process illustrated in the right picture of Fig. 6 is shown. Thereby in Fig. 7 a detailed cross-section of the slot 2 is provided, wherein the plane of the cross-section is in one plane with the knife edges 16, 17. Hence, an interaction between the cable 20, i.e. the isolation of the cable 20, with the two knife edges 16, 17 can be observed. Said interaction may be based on force fit and/or form fit. The force fit may result from a pressing-in of the isolation of the cable 20. The form fit may result from a cutting-in of the isolation of the cable 20. A combination is also possible.

In Fig. 8 switching the fixation means 30 from the open state and the closed state is depicted. A cross-section of the cable housing system 50 is provided which illustrates an interaction of the seven cables with the fixation means 30. In particular, an interaction between the cables being in contact with the fixation means 30 is emphasized with fine arrows. Said interaction may be based on force fit and/or form fit. Further, the interaction may result in the fixation means 30 pressing the cables against ends of the slots 2, 3, 4 which are opposite to the cable-insertion portion 10 and the fixation means 30. Thereby, the fixation means 30 also presses the cables 20, 21 between the two knife edges 16, 17.

Fig. 9 illustrates the step of ultra-sonic welding 170 together portions of the cables 20, 21. Thereby the portions of the cables 20, 21 which are welded together were each inserted through the cable housing 1**.**

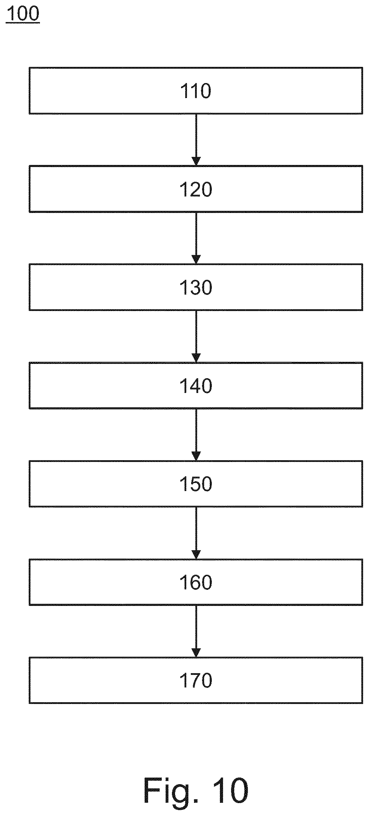

Fig. 10 depicts a schematic diagram of an exemplary method 100 for assembling a cable housing system 50 comprising the following steps:
a) providing 110 a cable housing 1 according to one of claims 1 to 11;
b) providing 120 at least two cables 20, 21;
c) inserting 130 a cable 20 through a cable-insertion portion 10 of one slot 2;
d) transferring 140 said cable 20 into a cable-retention portion 15 of said slot 2;
e) repeating 150 steps c) and d) with another cable;
f) closing 160 the cable housing 1 by switching the fixation means 30 from the open state to the closed state, and
g) ultra-sonic welding 170 together portions of the at least two cables 20, 21.

### List of reference signs

- 1: cable housing
- 2: slot
- 3: slot
- 4: slot
- 5: wall of the cable housing
- 6: first width
- 7: second width
- 10: cable-insertion portion
- 15: cable-retention portion
- 16: first knife edge
- 17: second knife edge
- 20, 21: cables
- 30: fixation means
- 50: cable housing system
- 100: for assembling a cable housing system
- 110: providing a cable housing
- 120: providing at least two cables
- 130: inserting a cable through a cable-insertion portion
- 140: transferring said cable into a cable-retention portion
- 150: repeating 150 steps 130 and 140 with another cable
- 160: closing the cable housing
- 170: ultra-sonic welding

## Claims

1. Cable housing (1), in particular a splice saver, for accommodating at least two cables (20, 21), the cable housing (1) comprising:
at least one cable mounting slot (2, 3, 4) in at least one wall (5) of the cable housing (1), wherein said at least one slot (2, 3, 4) comprises
a cable-insertion portion (10) adapted to receive at least one cable (20), wherein the cable-insertion portion (10) comprises a first width (6), and
a cable-retention portion (15) adapted to retain the at least one cable (20) by force fit and/or form fit, wherein the cable-retention portion (15) comprises a second width (7) which is smaller than the first width (6).

2. The cable housing (1) according to the preceding claim, wherein the cable housing (1) comprises a fixation means (30) which can be switched between an open state and a closed state, wherein the fixation means (30) is adapted to close the cable-insertion portion (10) at least partially when being in the closed state, wherein the fixation means (30) is preferably adapted to extend into the cable-retention portion (15) when being in the closed state, wherein further preferably the fixation means (30) comprises a living hinge (31).

3. The cable housing (1) according to the preceding claim, wherein the fixation means (30) is adapted to press the at least one cable (20) against one end of the at least one slot (2, 3, 4).

4. The cable housing (1) according to one of the preceding claims, wherein the cable-retention portion (15) comprises at least one knife edge (16) adapted to retain the at least one cable (20) by means of force fit and/or form fit, wherein preferably the at least one knife edge (16) is adapted for pressing in and/or cutting in the at least one cable (20).

5. The cable housing (1) according to one of the preceding claims, wherein the cable-retention portion (15) comprises at least two knife edges (16, 17) adapted to retain the at least one cable (20) by means of force fit and/or form fit, wherein preferably the at least two knife edges (16, 17) are substantially parallel and/or define the second width (7), wherein further preferably the at least two knife edges (16, 17) are adapted for pressing in and/or cutting in the at least one cable (20).

6. The cable housing (1) according to one of claims 2 or 3 with one of claims 4 or 5, wherein the fixation means (30) is adapted to press the at least one cable (20) towards the at least one knife edge (16) or to press the at least one cable (20) between the at least two knife edges (16, 17).

7. The cable housing (1) according to one of claims 4 to 6, wherein the at least one knife edge (16) or the at least two knife edges (16, 17) extend along the at least one slot (2,3,4).

8. The cable housing (1) according to one of the preceding claims, wherein the cable housing (1) comprises at least two slots (2, 3, 4), preferably at least three slots (2, 3,4).

9. The cable housing (1) according to one of the preceding claims, wherein at least one of the at least one slots (2, 3, 4) is configured to receive at least two cables (20, 21), preferably at least three cables.

10. Cable housing system (50) comprising
the cable housing (1) according to one of the preceding claims, and
at least two cables (20, 21) accommodated in the cable housing (1).

11. Method (100) for assembling a cable housing system (50) comprising the following steps:
a) providing (110) a cable housing (1) according to one of claims 1 to 10;
b) providing (120) at least two cables (20, 21);
c) inserting (130) a cable (20) through a cable-insertion portion (10) of one slot (2);
d) transferring (140) said cable (20) into a cable-retention portion (15) of said slot (2), and
e) repeating (150) steps c) and d) with another cable.

12. The method (100) according to the preceding claim, wherein the method (100) further comprises the following step after step b), preferably after step e):
ultra-sonic welding (170) together portions of the at least two cables (20, 21), wherein preferably the portions of the at least two cables (20, 21) which are welded together were each inserted through the cable housing (1).

13. The method (100) according to one of the preceding claims 11 or 12 in combination with claim 2, wherein the method (100) further comprises the following step:
closing (160) the cable housing (1) by switching the fixation means (30) from the open state to the closed state.

14. The method (100) according to one of the preceding method claims, wherein the method (100) further comprises the following step:
stripping a part of the insertion end of the cable(s).
